# EUROPÄISCHE PATENTANMELDUNG

(11) **EP 2 256 446 A2**
(43) Veröffentlichungstag der Anmeldung: **01.12.2010**
(21) Anmeldenummer: 10152545.9
(22) Anmeldetag: 03.02.2010
(51) Int. Cl.: F25D 29/00

(54) **Temperierbare Lagervorrichtung, insbesondere Kühl- bzw. Gefriergerät für Blutprodukte**

(30) Priorität: 18.05.2009 DE 102009021711
(71) Anmelder: DOMETIC S.a.r.l., 9808 Hosingen (LU)
(72) Erfinder: Billen, Stephan, 54634 Bitburg (DE); Jakoby, Rainer, 54689 Daleiden (DE); Pinto, Admilson, 54298 Aach (DE); Paltzer, Andreas, 54675 Mettendorf (DE); Ligot, Philippe, 63800 Cournon d'Auvergne (FR)
(74) Vertreter: Grosse, Felix Christopher

(57) **Zusammenfassung**

Die Erfindung betrifft eine Lagervorrichtung 1, insbesondere ein Kühl- bzw. Gefriergerät für Blutprodukte, sowie ein Verfahren zur Überwachung einer temperierbaren Lagervorrichtung 1. Die temperierbare Lagervorrichtung 1 weist mindestens ein Arbeitsvolumen 23 auf, das mittels wenigstens einer Temperiereinheit 25 temperierbar ist. Dem Arbeitsvolumen 23 ist wenigstens ein Temperatursensor 26a-26e zugeordnet, der mit einer Steuereinheit zur Temperaturüberwachung gekoppelt ist. Die Steuereinheit zur Temperaturüberwachung ist zumindest zeitweise über ein, vorzugsweise paketbasiertes, Datenfernübertragungssystem mit einer Auswertestelle messwertübertragend gekoppelt.

## Beschreibung

Die Erfindung betrifft eine temperierbare Lagervorrichtung, insbesondere ein Kühl- bzw. Gefriergerät für Blutprodukte zum Einsatz in einer Blutbank.

Im Stand der Technik sind zahlreiche derartige Lagervorrichtungen bekannt. Diese sind meist schrankförmig ausgeführt mit einer Decke, einem Boden und drei Seitenwänden, wobei an einer Seitenwand eine Tür schwenkbar befestigt ist. Im Innern der Lagervorrichtung können mehrere Fächer vorgesehen sein, in denen einzulagernde Gegenstände, insbesondere Blutbeutel, gelagert sein können. Hierzu können die einzelnen Lagerfächer ausziehbar und mit einer gitterförmigen Unterteilung versehen sein. Derartige Lagervorrichtungen werden von einer Temperiereinheit temperiert, die mit einem Temperaturregulierungssensor zusammenwirkt, um eine Temperaturregulierung in der Lagervorrichtung durchzuführen. Der Temperaturregulierungssensor ist dabei in der Regel in der Nähe eines Verdampfers angeordnet.

Unter Blutprodukten werden im Rahmen dieser Anmeldung insbesondere Blutkonserven oder Plasmabeutel verstanden. Blut muss bei einer Temperatur von 4 °C ± 1,5 °C gelagert werden. Der eutektische Punkt von Blutplasma liegt bei -23 °C. Daher sind bei Blutplasma Lagertemperaturen von -40°C ± 10 °C einzuhalten.

Plasmalagerungseinrichtungen sind durch die DIN 58375 genormt. Für Blutkon-serven-Kühlgeräte gibt es die DIN 58371.

Unter "temperieren" wird im Rahmen dieser Anmeldung sowohl Erwärmen als auch Kühlen oder Gefrieren, mithin das Herstellen einer gewünschten Temperatur in der Lagervorrichtung, verstanden.

Die Temperatur ist in der Regel durch einen Regler, der beispielsweise an einer der Seitenwände oder der Decke befestigt ist, einstellbar. In neueren Geräten kann zudem eine Mikroprozessorsteuerung vorgesehen sein, mittels derer die Temperierung gesteuert werden kann. Eine Lagervorrichtung kann auf einer ihrer Außenseiten eine Anzeige z.B. für die Temperatur im Inneren der Lagervorrichtung aufweisen.

In der französischen Norm NFX15-140, die sich auf alle Arten von Kühlgeräten bzw. Temperaturdiagnoseeinrichtungen in solchen Kühlgeräten bezieht, werden weitere Eigenschaften derartiger Lagerräume spezifiziert. Bei Kühlgeräten für blutenthaltende Produkte, insbesondere also Blutkonserven, ist gesetzlich vorgeschrieben, dass die Temperatur werksseitig voreinzustellen ist und von den Betreibern der Lagervorrichtung nicht veränderbar sein darf. Dies dient dem Zweck, die Blutprodukte über eine längere Zeit, das heißt in der Regel maximal 33 Tage, in einwandfreiem Zustand lagern zu können und deren Haltbarkeit zu garantieren. Bei Tiefkühlgeräten für Blutplasma darf der Betreiber die Tiefkühltemperatur selbst regulieren. Es muss jedoch sichergestellt sein, dass eine Höchsttemperatur von ca. -27 °C nicht überschritten wird.

Bei bekannten Lagervorrichtungen für Blutprodukte ist eine Aufzeichnung der gemessenen Temperaturwerte vorgesehen, um auch über längere Perioden hinweg protokollieren zu können, ob die vorgeschriebenen Höchst- oder Mindesttemperaturen nicht über- oder unterschritten wurden. Die Aufzeichnungsprotokolle werden von den zuständigen Personen der staatlichen Überwachungsbehörden in regelmäßigen oder unregelmäßigen Abständen kontrolliert.

Ausgehend vom bekannten Stand der Technik liegt der Erfindung die Aufgabe zugrunde, eine temperierbare Lagervorrichtung, insbesondere ein Kühl- bzw. Gefriergerät für Blutprodukte aufzuzeigen, bei dem die Notwendigkeit, die Lagervorrichtung zu Kontrollzwecken aufzusuchen, reduziert ist, sowie ein Verfahren zur Überwachung einer Lagervorrichtung aufzuzeigen.

Der gegenständliche Teil der Aufgabe wird durch eine Lagervorrichtung mit den Merkmalen des Anspruchs 1 gelöst. Vorteilhafte Ausführungsformen der temperierbaren Lagervorrichtung sind Gegenstand der Ansprüche 2 bis 13.

Die erfindungsgemäße temperierbare Lagervorrichtung, die insbesondere als Kühl- bzw. Gefriergerät für Blutprodukte ausgebildet ist, weist mindestens ein Arbeitsvolumen, das heißt ein temperaturüberwachtes Lagervolumen, auf. Das Arbeitsvolumen ist mittels wenigstens einer Temperiereinheit temperierbar. Dem Arbeitsvolumen ist zudem wenigstens ein festinstallierter Temperatursensor zugeordnet, der mit einer Steuereinheit zur Temperaturüberwachung gekoppelt ist. Die Steuereinheit zur Temperaturüberwachung wiederum ist zumindest zeitweise über ein, vorzugsweise paketbasiertes, Datenfernübertragungssystem mit einer Auswertestelle messwertübertragend gekoppelt.

Die Steuereinheit zur Temperaturüberwachung ist getrennt vom Regelkreis zur Temperierung des Arbeitsvolumens ausgeführt und in Ergänzung zu diesem Regelkreis in der Lagervorrichtung angeordnet.

Die gemessenen Temperaturen im Arbeitsvolumen werden erfindungsgemäß an eine Auswertestelle übertragen. Die Messwertübertragung kann unidirektional oder bidirektional erfolgen, das heißt, die Daten werden einseitig von der Steuereinheit zur Temperaturüberwachung an die Auswertestelle zu bestimmten, vorprogrammierten Zeiten übertragen oder die Auswertestelle ist in der Lage, jederzeit die Steuereinheit zur Temperaturüberwachung zu kontaktieren, um die Temperaturen in den Arbeitsvolumina abzufragen.

In der Steuereinheit zur Temperaturüberwachung kann dazu ein Temperaturüberwachungsprotokoll erstellt und an die Auswertestelle übermittelt werden, wobei das Temperaturüberwachungsprotokoll auch statistische Auswertungen (z.B. arithmetische, geometrische, rollierende oder gewichtete Mittelwerte, Standardabweichungen, Regressionsanalysen, etc.) der gemessenen Temperaturverläufe beinhalten kann.

Somit kann die erfindungsgemäße Lagervorrichtung auch aus der Entfernung überwacht werden, so dass es nicht erforderlich ist, die Lagervorrichtung in der bisher erforderlichen Häufigkeit zu Temperaturkontrollzwecken aufzusuchen. Auf diese Weise wird der Betrieb der Lagervorrichtung vereinfacht und kostengünstiger gestaltet.

Gemäß einer vorteilhaften Ausführungsform ist das Datenfernübertragungssystem ein TCP/IP-Netzwerk. TCP/IP-Netzwerke sind heute gängiger Stand der Technik und bei den meisten Lagervorrichtungsbetreibern in den Geschäftsräumen bereits installiert. Zu einem großen Teil sind diese internen Netzwerke (auch Intranets genannt) an das Internet angeschlossen. Somit kann die Lagervorrichtung auf einfache Weise an ein bestehendes in den Geschäftsräumen bereits installiertes Netzwerk angeschlossen werden. Es können auf diesem Weg die gemessenen Temperaturen von der Steuereinheit zur Temperaturüberwachung mit oder ohne Zwischenspeicherung an einen Server in einer Auswertestelle übertragen werden.

Alternativ ist es vorstellbar, dass das Datenfernübertragungssystem als digitales Mobiltelefonnetzwerk ausgebildet ist. Digitale Mobiltelefonnetzwerke haben sich, insbesondere in den Industrieländern, mittlerweile soweit durchgesetzt, dass fast an jedem Ort eine gut ausgebaute Infrastruktur bereitsteht, die zur (kostengünstigen) Übertragung von Messwerten genutzt werden kann. Ein weiterer Vorteil ist, dass die Sendeeinrichtungen mittlerweile soweit miniaturisiert wurden, dass sie ohne weiteres in die Lagervorrichtung eingebaut werden können.

In diesem Zusammenhang ist es vorteilhaft, wenn Messwerte zur Auswertestelle über einen Kurzmitteilungsdienst, insbesondere per short message service (SMS) oder multimedia messaging service (MMS) übertragbar sind. Die Messwerte können auf digitale Weise mit einer geringen Anzahl von Zeichen dargestellt werden, so dass sie in die Kurzmitteilungen eingebunden werden können.

Weiterhin kann eine Anzeigeeinheit, vorzugsweise ein Bildschirm, mit der Steuereinheit zur Temperaturüberwachung vorteilhaft gekoppelt sein. Auf dem Bildschirm kann im Betriebszustand der Lagervorrichtung die Temperatur in der Lagervorrichtung oder in einzelnen Arbeitsvolumina der Lagervorrichtung angezeigt sein. Ferner können auf dem Bildschirm Temperaturverläufe über die Zeit darstellbar sein.

Der Bildschirm kann ein Flachbildschirm sein. Flachbildschirme, insbesondere mit Dünnschichttransistoren, sogenannte Thin-Film-Transistor-Bildschirme oder TFT-Bildschirme, sind heutzutage in verschiedenen Größen zu sehr geringen Kosten erhältlich. Sie ermöglichen es, die gewünschten Informationen grafisch darzustellen, wobei auch mehrfarbige Flachbildschirme zum Einsatz kommen können.

Weiterhin kann der Bildschirm in einer Weiterbildung der Lagervorrichtung berührungsempfindlich sein. Dies ermöglicht es, Eingaben direkt am Bildschirm zu tätigen, so dass, insbesondere bei einem Gefriergerät für Blutplasma, die Temperatur in der Lagervorrichtung durch einfaches Antippen des Bildschirms einstellbar ist.

Gemäß einer weiteren vorteilhaften Ausführungsform können mehrere Arbeitsvolumina vorgegeben sein, die durch die Temperiereinheit oder jeweils eine separate Temperiereinheit temperierbar sind. Auf diese Weise können in der Lagervorrichtung mehrere Zonen eingerichtet werden, in denen unterschiedliche Temperaturen herrschen, zum Beispiel um darin Produkte, wie Blutkonserven und Blutplasma, bei unterschiedlichen Temperaturen und getrennt voneinander einzulagern.

Vorteilhafterweise ist ein Lautsprecher mit der Steuereinheit zur Temperaturüberwachung gekoppelt. Über den Lautsprecher können Temperaturwerte oder Warnsignale akustisch ausgesendet werden, die den Betreiber der Lagervorrichtung bzw. dessen verantwortliches Personal darauf hinweisen, dass eine zulässige Höchst- oder Mindesttemperatur über- oder unterschritten wurde.

Weiterhin können die Temperatursensoren an in den Arbeitsvolumina lagernden Gegenständen lösbar, beispielsweise durch Kleben, befestigt sein. Dies ermöglicht es, die Temperatur direkt am eingelagerten Gegenstand zu messen.

Ferner ist vorgesehen, dass die Temperatursensoren einem Arbeitsvolumen nachrüstbar und/oder austauschbar zugeordnet sein können. Auf diese Weise kann die Lagervorrichtung auch nachträglich mit einer erfindungsgemäßen Temperaturüberwachungseinrichtung ausgestattet werden. Sollte die Temperaturüberwachungseinrichtung ausfallen oder beschädigt werden, kann diese kostengünstig durch eine neue ersetzt werden.

Durch das Öffnen der Lagervorrichtung, z. B. um Lagergüter einzulagern oder zu entnehmen, können kurzzeitige Temperaturschwankungen in der Lagervorrichtung auftreten. Damit diese die Temperaturmessergebnisse nicht verfälschen, kann eine Verschlusseinrichtung an der Lagervorrichtung vorgesehen sein, die von der Steuereinheit zur Temperaturüberwachung aktivierbar ist, um ein Öffnen der Lagervorrichtung während einer Temperaturmessung, beispielsweise durch Öffnen einer Tür, zu unterbinden. Alternativ oder ergänzend dazu kann vorgesehen sein, auf dem Bildschirm oder einer sonstigen Anzeigeeinheit einen entsprechenden Hinweis anzuzeigen, wenn eine Temperaturmessung stattfindet. Weiterhin ist es vorstellbar, die Lagervorrichtung mit einem Öffnungssensor zu versehen, der feststellt, ob zum Beispiel die Tür der Lagervorrichtung geöffnet ist. Diese Information könnte zusammen mit den Temperaturmesswerten gespeichert und gegebenenfalls an die Auswertestelle übertragen werden. Auf diese Weise können bei geöffneter Lagervorrichtung und kurz nach einer Öffnung der Lagervorrichtung erfasste Temperaturen gezielt aus einer Auswertung ausgeschlossen werden.

Der verfahrensmäßige Teil der Aufgabe wird durch ein Verfahren zur Überwachung einer temperierbaren Lagervorrichtung mit den Schritten von Anspruch 14 gelöst. Diese Schritte sind im Einzelnen:
(a) Erfassen der Temperatur in wenigstens einem Arbeitsvolumen der Lagervorrichtung mit wenigstens einem Temperatursensor als Messwert;
(b) Periodisches Abfragen der Messwerte des wenigstens einen Temperatursensors durch eine Steuereinheit zur Temperaturüberwachung; und
(c) Übertragen der abgefragten Messwerte an eine Auswertestelle über ein Datenfernübertragungssystem.

Gemäß einer vorteilhaften Ausführungsform des Verfahrens werden die abgefragten Messwerte in einer Speichereinheit der Steuereinheit zur Temperaturüberwachung zwischengespeichert. Dies dient der Reduzierung der Häufigkeit der Datenübertragungen zur Auswertestelle.

Weiterhin ist vorgesehen, dass die abgefragten oder zwischengespeicherten Messwerte aggregiert werden. Somit kann das Volumen einer Datenübertragung zur Auswertestelle reduziert werden. Beim Aggregieren der Messwerte können Maxima, Minima und/oder gewichtete Mittelwerte für eine Messperiode bestimmt werden.

Die abgefragten oder zwischengespeicherten Messwerte können von der Steuereinheit zur Temperaturüberwachung zu vorprogrammierten Zeitpunkten an die Auswertestelle übertragen werden. Diese Form der Datenübertragung wird auch unidirektionale Datenübertragung genannt. Die abgefragten oder zwischengespeicherten Messwerte können aber auch von der Auswertestelle aus abgerufen werden (sogenannte bidirektionale Datenübertragung).

Die Erfindung ist nachfolgend anhand von in den Figuren dargestellten Ausführungsbeispielen näher erläutert. Es zeigen:
- Fig. 1: die erfindungsgemäße Lagervorrichtung in einer Ansicht von vorne;
- Fig. 2: eine Ansicht der erfindungsgemäßen Lagervorrichtung der Fig. 1 mit geöffneter Tür;
- Fig. 3: eine Draufsicht auf ein Schubfach;
- Fig. 4: einen Temperatursensor in einer Halterung;
- Fig. 5: einen aufklebbaren Temperatursensor; und
- Fig. 6: eine Lagervorrichtung mit zwei Arbeitsvolumina.

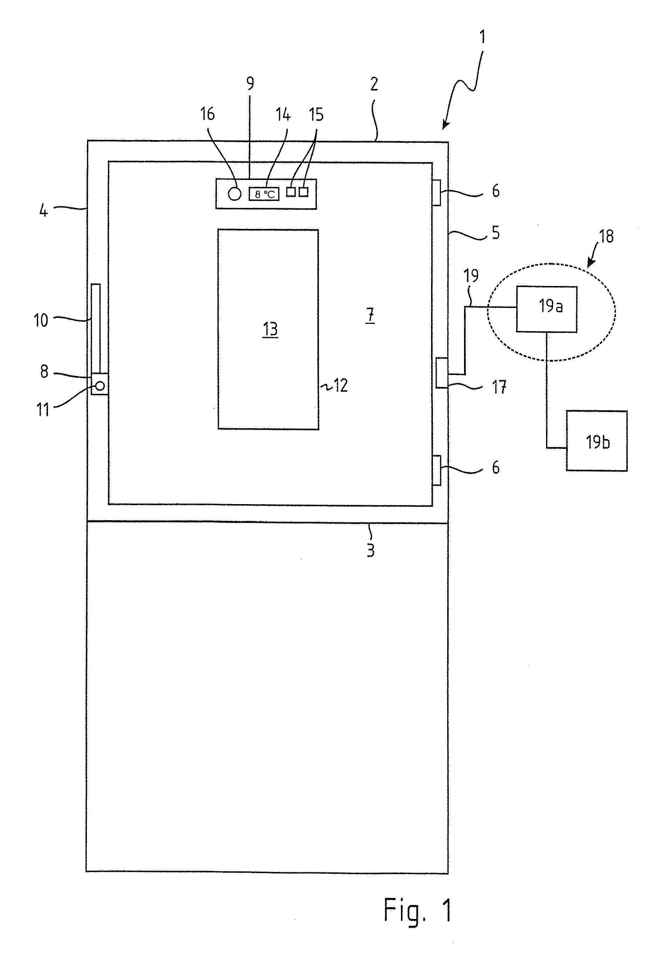

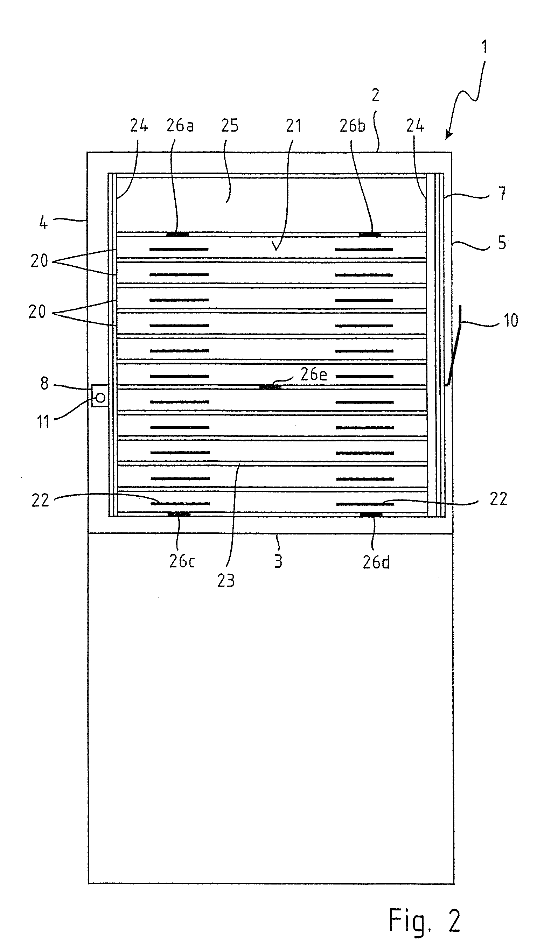

In den Fig. 1 und 2 ist eine erfindungsgemäßer temperierbare Lagervorrichtung 1, insbesondere ein Kühl-, Tiefkühl- oder Gefriergerät für Blutprodukte, dargestellt. Die Lagervorrichtung 1 ist schrankförmig ausgebildet und weist eine Decke 2, einen Boden 3, eine linke Seitenwand 4, eine rechte Seitenwand 5 und eine nicht näher dargestellte Rückwand auf. An der rechten Seitenwand 5 ist über ein Scharnier 6 eine Tür 7 schwenkbar befestigt. Die Lagervorrichtung 1 weist eine Verriegelungseinheit 8 auf der in der Bildebene linken Seite auf, mit der die Tür 7 an der linken Seitenwand 4, manuell oder von einer Steuereinheit 9 zur Temperaturüberwachung gesteuert, verriegelt werden kann. Die Verriegelungseinheit 8 weist einen hebelförmig ausgeführten, nach oben ragenden Griff 10 sowie ein Schloss 11 auf, durch welches die Lagervorrichtung 1 abschließbar ist. Die Tür 7 ist mit einem Ausschnitt 12 versehen, in dem eine Glasscheibe 13 angeordnet ist, um in das Innere der Lagervorrichtung 1 sehen zu können. Im oberen Teil der Tür 7 ist die Steuereinheit 9 zur Temperaturüberwachung vorgesehen. Die Steuereinheit 9 zur Temperaturüberwachung weist eine Anzeigeeinheit 14 sowie mehrere Tasten 15 zur Bedienung der Steuereinheit 9 zur Temperaturüberwachung auf. Die Anzeigeeinheit 14 zeigt die Temperatur im Inneren der Lagervorrichtung 1 an. Zudem kann angezeigt werden, ob gerade eine Temperaturmessung durchgeführt wird. Weiterhin ist an der Steuereinheit 9 zur Temperaturüberwachung ein Schloss 16 vorgesehen, um ein unbeabsichtigtes Verstellen von Betriebsparametern zu unterbinden. Alternativ ist es vorstellbar, anstelle der Sicherung durch das Schloss die Steuereinheit zur Temperaturüberwachung durch eine Eingabe einer Ziffernfolge oder einer Tastenkombination vor unberechtigten Einstellungsveränderungen zu sichern.

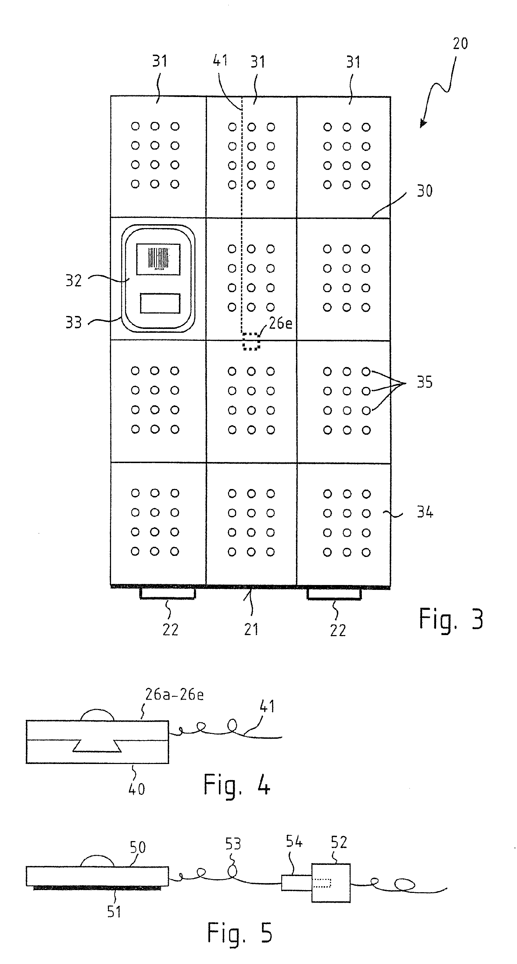

Im Innern der Lagervorrichtung 1 sind mehrere ausziehbare Schubfächer 20 angeordnet (vgl. Fig. 2 und 3). Diese Schubfächer 20 weisen jeweils an der Vorderseite 21 zwei voneinander beabstandet angeordnete Griffe 22 auf. In jedem Schubfach 20 ist eine gitterförmige Einlage 30 aus Kunststoff vorgesehen, die insgesamt zwölf Ablageflächen 31 definiert, auf denen in Beuteln 33 abgepackte Blutprodukte 32 gelagert sind. Das gesamte Innere der Lagervorrichtung 1 definiert ein Arbeitsvolumen 23. Um eine gleichmäßige Temperatur im Arbeitsvolumen 23 sicherzustellen, ist der Boden 34 jedes Schubfachs 20 als Lochblech ausgeführt, das heißt, der Boden weist in regelmäßigen Abständen Bohrungen oder Ausstanzungen 35 auf, durch die Luft hindurch strömen kann.

Die einzelnen Schubfächer 20 sind ausziehbar in einem Gestell 24 angeordnet. Im oberen Teil des Gestells 24 ist eine Temperiereinheit 25 zur Temperierung des Arbeitsvolumens 23 untergebracht. Im Arbeitsvolumen 23 sind mehrere Temperatursensoren 26a-26e vorgesehen. Vier sind dabei im Deckenbereich, vier im Bodenbereich sowie ein Temperatursensor 26e an einem Boden 34 eines Schubfachs 20 im mittleren Bereich des Arbeitsvolumens 23 befestigt. Zur Befestigung der Temperatursensoren 26a-26e sind Haltevorrichtungen 40 vorgesehen. Die Temperatursensoren 26a-26e sind über Drahtverbindungen 41 mit der Steuereinheit 9 zur Temperaturüberwachung gekoppelt, siehe auch Fig. 4. Alternativ ist auch eine drahtlose Kopplung, beispielsweise mittels einer Funkverbindung denkbar.

Die Steuereinheit 9 zur Temperaturüberwachung ist mit einem Datenfernübertragungssystem 18 gekoppelt (vgl. Fig. 1). Das Datenfernübertragungssystem 18 ist ein paketbasiertes Datenfernübertragungssystem 18, speziell ein TCP/IP-Netzwerk. Hierzu weist die Steuereinheit 9 zur Temperaturüberwachung eine Schnittstelle 17 für ein Netzwerkkabel 19 auf. Alternativ ist auch eine Schnittstelle für eine drahtlose Ankopplung der Steuereinheit 9 zur Temperaturüberwachung an das Datenfernübertragungssystem 18, beispielsweise mittels einer Funkverbindung (WLAN), möglich. Die Steuereinheit 9 zur Temperaturüberwachung ist als Mikrocomputer ausgeführt, der über das Netzwerkkabel 19 an weitere Netzwerkkomponenten 19a des Datenfernübertragungssystems 18 angebunden ist. Weiterhin ist es vorstellbar, die Steuereinheit 9 zur Temperaturüberwachung mit einer Sendeeinrichtung für ein digitales Mobiltelefonnetzwerk auszustatten. Auf diese Weise können unter anderem Messwerte in sogenannte Kurzmitteilungen verpackt über das Mobiltelefonnetzwerk versendet werden. Auf diese Weise können Temperaturmesswerte von der Steuereinheit 9 zur Temperaturüberwachung über das Datenfernübertragungssystem 18 zu einer Auswertestelle 19b übertragen werden.

Die Anzeigeeinheit 14 ist ein Bildschirm, der mit der Steuereinheit 9 zur Temperaturüberwachung gekoppelt ist. Der Bildschirm 14 ist in diesem Fall als Flachbildschirm, der hochauflösend ist und eine farbige Darstellung von Informationen ermöglicht, ausgebildet. Weil der Bildschirm 14 zudem berührungsempfindlich ausgebildet ist, können unter anderem die Temperaturen in der Lagervorrichtung 1 eingestellt werden. Dies ist aber nicht möglich, wenn die Lagervorrichtung 1 als Kühlgerät für blutenthaltende Produkte 32, d.h. insbesondere Blutkonserven, verwendet wird, denn dann ist die Temperatur werksseitig voreingestellt und durch den Betreiber nicht veränderbar.

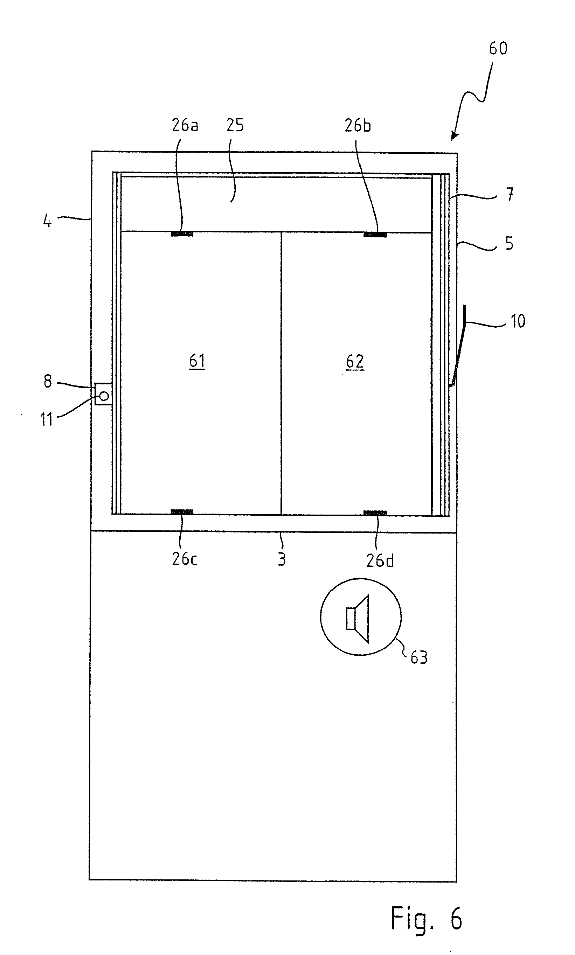

Fig. 6 zeigt eine schematische Darstellung einer bevorzugten alternativen Ausführungsform der temperierbaren Lagervorrichtung 60. Gleiche Merkmale sind in dieser Figur mit identischen Bezugszeichen versehen.

In der Lagervorrichtung 60 sind zwei Arbeitsvolumina 61, 62 vorgesehen, die durch die Temperiereinheit 25 separat temperierbar sind. Weiterhin ist ein Lautsprecher 63 mit der Steuereinheit 9 zur Temperaturüberwachung verbunden, über den akustische Warnsignale ausgegeben werden können.

Es ist vorgesehen, an einem in einem der Arbeitsvolumina 61, 62 einzulagernden Gegenstand einen Temperatursensor 50 lösbar zu befestigen. Der Temperatursensor 50 kann dazu eine klebrige Oberfläche 51 aufweisen, die bei jeder Betriebstemperatur gut an dem einzulagernden Gegenstand anhaftet. Im Innern der Lagervorrichtung 60 sind Steckdosen 52 vorgesehen, in welche ein mit dem Temperatursensor 50 über eine Drahtverbindung 53 gekoppelter Stecker 54 eingesteckt werden kann. Die Steckdosen 54 sind ebenfalls mit der Steuereinheit 9 zur Temperaturüberwachung verbunden.

Am Boden 3, der Decke 2 und am Boden 34 eines Schubfachs 20 im Arbeitsvolumen 23, 60, 61 sind Halterungen 40 derart angeordnet, dass die Temperatursensoren 26a-26e auch zu einem späteren Zeitpunkt nachgerüstet bzw. ausgetauscht werden können.

Mit der erfindungsgemäßen Lagervorrichtung 1, 60 ist es möglich, einzulagernde Gegenstände, insbesondere Blutprodukte 32, sicher über längere Zeiträume hinweg ohne vor Ort durchzuführende Kontrollen zu lagern. Zur Überwachung der Lagerung wird die Temperatur in dem Arbeitsvolumen 23, 61, 62 mit wenigstens einem Temperatursensor 26a-26e, 50 erfasst. Der Temperatursensor 26a-26e, 50 wird hierzu von der Steuereinheit 9 zur Temperaturüberwachung periodisch abgefragt, um die Temperaturwerte zu erfassen. Die Temperaturwerte werden dann in der Steuereinheit 9 zur Temperaturüberwachung zwischengespeichert oder von dieser direkt an eine zentrale Auswertestelle 19b versandt. Weiterhin kann eine Aggregierung der Messwerte in der Steuereinheit 9 zur Temperaturüberwachung erfolgen, um die an die Auswertestelle 19b gesandten Messwerte in ihrer Zahl zu reduzieren. Die Messwerte werden in periodischen Abständen an die Auswertestelle 19b über ein vorzugsweise paketbasiertes Datenfernübertragungssystem 18 versandt. Beim Aggregieren der Messwerte werden Maxima, Minima und/ oder gerichtete Mittelwerte für eine Messperiode bestimmt.

### Bezugszeichen

- 1 -: Lagervorrichtung
- 2 -: Deckel
- 3 -: Boden
- 4 -: linke Seitenwand
- 5 -: rechte Seitenwand 6 - Scharnier 7 - Tür
- 8 -: Verriegelungseinheit
- 9 -: Steuereinheit zur Temperaturüberwachung 10 - Griff
- 11 -: Schloss
- 12 -: Ausschnitt
- 13 -: Glasscheibe
- 14 -: Anzeigeeinheit 15 - Taste
- 16 -: Schloss
- 17 -: Schnittstelle
- 18 -: Datenfernübertragungsnetzwerk
- 19 -: Netzwerkkabel
- 19a -: Netzwerkkomponente
- 19b -: Auswertestelle
- 20 -: Schubfach
- 21 -: Vorderseite von 20
- 22 -: Griff
- 23 -: Arbeitsvolumen
- 24 -: Gestell
- 25 -: Temperiereinheit
- 26a -: Temperatursensor
- 26b -: Temperatursensor
- 26c -: Temperatursensor
- 26d -: Temperatursensor
- 26e -: Temperatursensor
- 30 -: Einlage
- 31 -: Ablagefläche
- 32 -: blutenthaltendes Produkt
- 33 -: Beutel
- 34 -: Boden
- 35 -: Ausstanzung
- 40 -: Haltevorrichtung
- 41 -: Drahtverbindung
- 50 -: Temperatursensor
- 51 -: klebrige Oberfläche von 50
- 52 -: Steckdose
- 53 -: Drahtverbindung
- 54 -: Stecker
- 60 -: Lagervorrichtung
- 61 -: Arbeitsvolumen
- 62 -: Arbeitsvolumen
- 63 -: Lautsprecher

## Patentansprüche

1. Lagervorrichtung, insbesondere ein Kühl- bzw. Gefriergerät zur Einlagerung von Blutprodukten (32), die mindestens ein Arbeitsvolumen (23, 61, 62) aufweist, das mittels wenigstens einer Temperiereinheit (25) temperierbar ist, wobei dem Arbeitsvolumen (23, 61, 62) wenigstens ein Temperatursensor (26a-26e) zugeordnet ist, der mit einer Steuereinheit (9) zur Temperaturüberwachung gekoppelt ist, und wobei die Steuereinheit (9) zur Temperaturüberwachung zumindest zeitweise über ein Datenfernübertragungssystem (18) mit einer Auswertestelle (19b) zur Übertragung von Temperaturmesswerten koppelbar ist.

2. Lagervorrichtung nach Anspruch 1, **dadurch gekennzeichnet, dass** die Temperaturmesswerte von der Steuereinheit (9) zur Temperaturüberwachung programmgesteuert nach bestimmten Zeitabständen an die Auswertestelle (19b) übermittelbar sind.

3. Lagervorrichtung nach Anspruch 1 oder 2, **dadurch gekennzeichnet, dass** die Temperaturmesswerte von der Auswertestelle (19b) abfragbar sind.

4. Lagervorrichtung nach einem der Ansprüche 1 bis 3, **dadurch gekennzeichnet, dass** das Datenfernübertragungssystem (18) ein TCP/IP-Netzwerk ist.

5. Lagervorrichtung nach einem der Ansprüche 1 bis 3, **dadurch gekennzeichnet, dass** das Datenfernübertragungssystem (18) ein digitales Mobiltelefonnetzwerk ist.

6. Lagervorrichtung nach Anspruch 5, **dadurch gekennzeichnet, dass** die Messwerte zur Auswertestelle (19b) über einen Kurzmitteilungsdienst (SMS, MMS) übertragbar sind.

7. Lagervorrichtung nach einem der vorhergehenden Ansprüche, **dadurch gekennzeichnet, dass** eine Anzeigeeinheit (14), vorzugsweise ein Bildschirm, mit der Steuereinheit (9) zur Temperaturüberwachung gekoppelt ist.

8. Lagervorrichtung nach Anspruch 7, **dadurch gekennzeichnet, dass** der Bildschirm (14) ein Flachbildschirm ist.

9. Lagervorrichtung nach einem der Ansprüche 7 oder 8, **dadurch gekennzeichnet, dass** der Bildschirm (14) berührungsempfindlich ist.

10. Lagervorrichtung nach einem der vorhergehenden Ansprüche, **dadurch gekennzeichnet, dass** mehrere Arbeitsvolumina (61, 62) vorgesehen sind, die durch die wenigstens eine Temperiereinheit (25) separat temperierbar sind.

11. Lagervorrichtung nach einem der vorhergehenden Ansprüche, **dadurch gekennzeichnet, dass** ein Lautsprecher (63) mit der Steuereinheit (9) zur Temperaturüberwachung gekoppelt ist.

12. Lagervorrichtung nach einem der vorhergehenden Ansprüche, **dadurch gekennzeichnet, dass** der Temperatursensor (50) an einem in dem Arbeitsvolumen (61, 62) lagernden Gegenstand lösbar befestigt ist.

13. Lagervorrichtung nach einem der vorhergehenden Ansprüche, **dadurch gekennzeichnet, dass** der Temperatursensor (26a-26e, 50) dem Arbeitsvolumen nachrüstbar und/ oder austauschbar zugeordnet ist.

14. Verfahren zur Überwachung einer temperierbaren Lagervorrichtung (1, 60) umfassend die folgenden Schritte:
(a) Erfassen der Temperatur in wenigstens einem Arbeitsvolumen (23, 61, 62) der Lagervorrichtung (1, 60) mit wenigstens einem Temperatursensor (26a-26e, 50) als Messwert;
(b) Periodisches Abfragen der Messwerte des wenigstens einen Temperatursensors (26a-26e, 50) durch eine Steuereinheit (9) zur Temperaturüberwachung; und
(c) Übertragen des wenigstens einen abgefragten Messwerts an eine Auswertestelle (19b) über ein Datenfernübertragungssystem (18).

15. Verfahren nach Anspruch 14, **dadurch gekennzeichnet, dass** die abgefragten Messwerte in einer Speichereinheit der Steuereinheit (9) zur Temperaturüberwachung zwischengespeichert werden.

16. Verfahren nach Anspruch 14 oder 15, **dadurch gekennzeichnet, dass** die abgefragten oder zwischengespeicherten Messwerte aggregiert werden.

17. Verfahren nach Anspruch 16, **dadurch gekennzeichnet, dass** beim Aggregieren der Messwerte Maxima, Minima und/oder gewichtete Mittelwerte für eine Messperiode bestimmt werden.

18. Verfahren nach einem der Ansprüche 14 bis 17, **dadurch gekennzeichnet, dass** die abgefragten oder zwischengespeicherten Messwerte von der Steuereinheit (9) zur Temperaturüberwachung zu vorprogrammierten Zeitpunkten an die Auswertestelle (19b) übertragen werden.

19. Verfahren nach einem der Ansprüche 14 bis 18, **dadurch gekennzeichnet, dass** die abgefragten oder zwischengespeicherten Messwerte von der Auswertestelle (19b) aus abgerufen werden.
